(19) Europäisches Patentamt
European Patent Office
Office européen des brevets

(11) Publication number: **0 525 890 A1**

(12) **EUROPEAN PATENT APPLICATION**

(21) Application number: **92202266.0**

(51) Int. Cl.[5]: **C07C 395/00**, C01B 19/00

(22) Date of filing: **23.07.92**

(30) Priority: **31.07.91 US 739010**

(43) Date of publication of application: **03.02.93 Bulletin 93/05**

(84) Designated Contracting States: **AT BE CH DE DK ES FR GB GR IT LI LU NL PT SE**

(71) Applicant: **CALGON CORPORATION**
**Route 60-Campbell's Run Road**
**Robinson Township Pennsylvania 15205(US)**

(72) Inventor: **Kaiser, Herbert J.**
**5408 Dewey Street**
**St. Louis, Missouri 63116(US)**

(74) Representative: **Thompson, John Dr. et al**
**Merck & Co., Inc. European Patent**
**Department Terlings Park Eastwick Road**
**Harlow, Essex CM20 2OR(GB)**

(54) **Method for solubilizing tellurium using organic acids.**

(57) Method for solubilizing tellurium over a wide pH range using α-substituted carboxylic acids as solubilizing agents. Particular examples of solubilizing agents include hydroxyacetic acid, tannic acid, tartaric acid, citric acid, 2,6-pyridine dicarboxylic acid, lactic acid, gluconoδ-lactone (gluconic acid), 2-puroic acid, thiophene-2-carboxylic acid, 2,3-pyridine dicarboxylic acid, phosphonoacetic acid, thiophene-2-acetic acid and mercaptoacetic acid. Related compositions containing soluble tellurium are also disclosed.

EP 0 525 890 A1

## BACKGROUND OF THE INVENTION

The present invention relates to the solubilization of tellurium and to the use of various solubilizing agents to accomplish the same, particularly in the mid-pH range. The resulting compositions are useful in many industrial applications, including, but not limited to, applying tellurium coatings to metallic surfaces.

As disclosed in copending application Serial No. 361,087, corresponding to EP-A-0402084, tellurium ion sources can be used to apply tellurium-containing coatings to metallic surfaces. Unfortunately, because of solubility limitations, such processes are generally run at either high or low pH's. This is necessary because tellurium ions are generally insoluble in water in the mid-pH range.

It is therefore an object of this invention to provide water-soluble tellurium compositions and a method for solubilizing tellurium in the mid-pH range. This object is accomplished by utilizing various solubilizing agents designated herein. The instant solubilizing agent/tellurium compositions and instant method allow the use of tellurium solutions in the mid-pH range.

Co-pending application U.S.S.N. 361,087, corresponding to EP-A-0402084, discloses the use of tellurium-containing compositions to apply tellurium-containing coatings to metal substrates. While use of the instant solubilizing agents for the purpose of solubilizing tellurium in such compositions is not disclosed, this application does disclose the use of chelating agents such as EDTA in combination with polyfunctional organic acids such as glycollc acid or citric acid in tellurium compositions.

The MERCK INDEX, Eleventh Edition, discloses that tellurium is a reagent which produces a black finish on silverware.

Canadian patent No. 611,152 discloses the use of acid or acids to acidify solutions of sodium tellurate and "to maintain solution and not effect any precipitation of compounds". The acids also act to cleanse or dissolve the surface oxide of the metallic surface to be coated. Phosphoric acid, nitric acid, hydrochloric acid and fluoroboric acid are listed as suitable acids.

U.S. Pat. No. 4,321,231 discloses the use of soluble tellurium compounds as corrosion inhibitors for use in corrosive agueous media. The aqueous media can contain strong mineral acids, strong carboxylic acids or acid salts thereof. As particular examples, nitric acid, sulfuric acid, hydrohalic acids, chromic acid, sulfonic acids, phosphoric acid, lower alkanoic acids and oxalic acid are given.

However, these references do not disclose or in any way suggest the instant invention. In fact, no prior art relating to the solubilization of tellurium over a wide pH range is known to the inventor.

## SUMMARY OF THE INVENTION

The instant invention relates generally to a method for solubilizing and/or stabilizing tellurium in aqueous systems by the use of an effective amount of a solubilizing agent which may be generally described as an $\alpha$-substituted carboxylic acid. Particular examples of the instant solubilizing agents include, but are not limited to, hydroxyacetic acid, tannic acid, tartaric acid, citric acid, 2,6-pyridine dicarboxylic acid, lactic acid, glucono $\delta$-lactone (gluconic acid), 2-puroic acid, thiophene-2-carboxylic acid, 2,3-pyridine dicarboxylic acid, phosphonoacetic acid, thiophene-2-acetic acid and mercaptoacetic acid. Aqueous compositions characterized by the presence of soluble tellurium and at least one of the above acids are also disclosed.

## DETAILED DESCRIPTION OF THE INVENTION

More particularly, the instant invention is directed to a method for solubilizing and/or stabilizing tellurium over a wide pH range comprising adding an effective amount (for the purpose of solubilizing and/or stabilizing tellurium) of a designated solubilizing agent to water which contains or which will contain a tellurium ion source. In a preferred embodiment, a tellurium-ion source is added to water at a pH at which tellurium is soluble (e.g., less than about 2.5 or greater than about 11.0). An effective amount of at least one of the instant solubilizing agents is then added to the low or high pH tellurium-containing solution, and the pH is adjusted to the mid-pH range. Alternatively, the solubilizing agent can be added prior to the tellurium.

Thus, the instant invention is a method for solubilizing tellurium in an aqueous system containing or which will contain a tellurium ion source which comprises adding an effective amount of a designated solubilizing agent to said aqueous system.

Relative to this method, the term "effective amount" refers to that quantity of a solubilizing agent necessary to solubilize or to maintain the solubility of (i.e., stabilize) the desired concentration of tellurium in water at a given pH.

The present invention is also directed to compositions comprising: a) water, b) tellurium or a tellurium

ion source; and c) an effective amount of a designated solubilizing agent for the purpose of solubilizing and/or stabilizing tellurium.

In general terms, it is believed that the instant solubilizing agents comprise a class of organic acids which contain an element or a functional group of sufficient electron density to chelate, complex or react with tellurium on the carbon alpha to the acid group. Compounds within this class have been shown by the instant inventor to solubilize tellurium in the mid pH ranges.

Such agents have the following general structure:

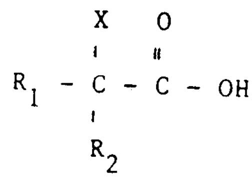

wherein:

X is an element or functional group of sufficient electron density to chelate or react with tellurium. Particular examples of X include, but are not limited to, functional groups with heteroatoms such as O, S, N. Preferred examples include OH and SH.

$R_1$ and $R_2$, which may be the same or different, include hydrogen, straight or branched alkyl groups, aryl groups, substituted alkyl groups and substituted aryl groups.

Also, the instant inventor has found that alpha-substituted heterocyclic organic acids function to maintain tellurium solubility. Examples of such compounds include, but are not limited to, the pyridine dicarboxylate analogues shown below:

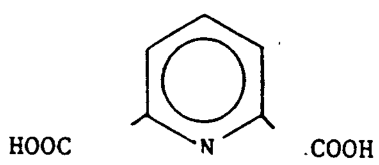

**2,6-Pyridine Dicarboxylic Acid**

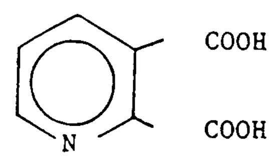

**2,3-Pyridine Dicarboxylic Acid**

Both the 2,6-dicarboxylic acid and the 2,3-dicarboxylic acid maintain the solubility of the tellurium.

It is theorized by the inventor that the heteroatoms of such compounds are functional relative to tellurium solubility. For example, the participation of the nitrogen can be seen in the following comparison of 2,6-pyridine dicarboxylic acid versus isophthalic acid:

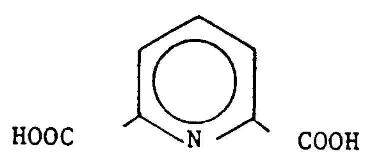

**2,6-Pyridine Dicarboxylic Acid**

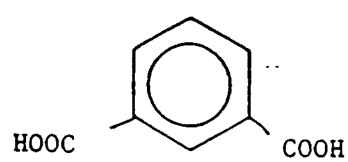

**iso-Phthalic Acid**

In iso-phthalic acid, nitrogen is replaced with a carbon in the ring. Iso-phthalic acid does not maintain tellurium solubility over the desired pH range, while 2,6-pyridine dicarboxylic acid does.

Other examples of heterocyclic compounds which maintain tellurium solubility include 2-furoic acid and thiophene-2-carboxylic acid, whose structures are shown below.

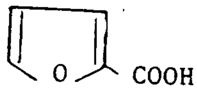

2-Furoic Acid

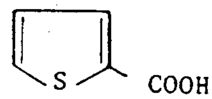

Thiophene-2-Carboxylic Acid

The preferred α-substituted organic acid solubilizing agents are selected from the group consisting of hydroxyacetic acid, tannic acid, tartaric acid, citric acid, 2,6-pyridine dicarboxylic acid, lactic acid, gluconoδ-lactone (gluconic acid), 2-puroic acid, thiophene-2-carboxylic acid, thiophene-2-acetic acid mercaptoacetic acid and mixtures thereof. These preferred compounds are believed to be commercially available from Sigma Chemical Company.

More preferred solubilizing agents are compounds selected from the group consisting of hydroxyacetic acid, tartaric acid and citric acid. Citric acid is believed to be the most preferred solubilizing agent.

Any source of tellurium ions may be used. Preferred tellurium ion sources are the oxides of tellurium and salts of telluric acid or tellurous acid. The most preferred sources of tellurium ions are tellurium oxide and salts of telluric acid. Such compounds are commercially available from Lewer Corporation.

More particularly, the instant compositions comprise: a) water; at least about 0.00001%,by weight, based on the weight of a), of tellurium, on an active tellurium basis, or tellurium ions and b) an effective amount of at least one of the above defined solubilizing agents. Such compositions may be prepared by conventional mixing or blending techniques in a mix tank. Agitation is desirable. Order of addition is not believed to be critical.

Preferably, the compositions of the present invention comprise a) water; b) at least about 0.00001%, by weight (based on the weight of the water), of tellurium (active tellurium basis) or tellurium ions, more preferably about 0.00001% to about 10%, by weight (based on the weight of the water), of tellurium or tellurium ions; and c) and an effective amount of a solubilizing agent selected from the group consisting of hydroxyacetic acid, tannic acid, tartaric acid, citric acid, 2,6-pyridine dicarboxylic acid, lactic acid, gluconoδ-lactone (gluconic acid), 2-puroic acid, thiphene-2-carboxylic acid, 2,3-pyridine dicarboxylic acid, phosphonoacetic acid, thiophene-2-acetic acid and mercaptoacetic acid.

Tellurium solubility, absent a solubilizing acid, is pH dependant. Thus, at pH's above about 2.5 and below about 11.0, tellurium is substantially insoluble. By contrast, the instant agents generally solubilize tellurium over the entire pH range. These agents are believed to be particularly effective in the mid-pH range, which, as used herein, refers to pH's of from about 2.5 to about 11.0, preferably about 3.0 to about 9.0.

Chelation and sequestration are well known phenomena. It was initially theorized that any chelant/sequestrant might stabilize and/or solubilize tellurium; examples of some of the more common commercial chelants are EDTA and NTA. However, when these conventional chelants were tested, the tellurium was found not to be soluble in the mid pH ranges. This led to the testing of a multitude of compounds for their abilities to solubilize tellurium in the mid pH range. Surprisingly, the instant solubilizing agents were generally found to solubilize tellurium and/or to maintain tellurium solubility across the entire pH range, but particularly in the mid-pH range.

As described above, the compositions of the present invention contain water, at least about 0.00001%, by weight (based on the weight of the water), of tellurium (active tellurium basis) or tellurium ions, more preferably about 0.00001% to about 10%, by weight (based on the weight of the water), of tellurium or tellurium ions and an effective amount of an α-substituted organic acid solubilizing agent, preferably an α-substituted organic acid selected from the group consisting of hydroxyacetic acid, tannic acid, tartaric acid, citric acid, 2,6-pyridine dicarboxylic acid, lactic acid, gluconoδ-lactone (gluconic acid), 2-puroic acid, thiphene-2-carboxylic acid, 2,3-pyridine dicarboxylic acid, phosphonoacetic acid, thiophene-2-acetic acid and mercaptoacetic acid. More preferably, the solubilizing agent is selected from the group consisting of hydroxyacetic acid, tartaric acid and citric acid.

The balance of the instant aqueous compositions comprises any other additives or compounds compatible with tellurium ion sources and the instant solubilizing agents, including, for example, chelants, accelerators and other conventional conversion coating additives. Such compositions may be prepared by well-known mixing or blending techniques in a mix tank. Agitation is desirable. Order of addition is not believed to be critical.

while it is believed that any amount of a solubilizing agent will solubilize and/or stabilize the tellurium present to some extent, it is also believed that, for substantially complete solubilization to occur, the molar

ratio of solubilizing agent: active tellurium (i.e., available tellurium ions) should be at least about 1:1. Thus, for substantially complete solubilization, it is preferred that the molar ratio, of component c) to component b) in the instant compositions be at least 1:1, subject of course to the solubility limitations of the solubilizing agent.

To demonstrate the solubilizing effect of the instant solubilizing agents on tellurium, an aqueous solution of a tellurium ion source may be prepared at a low (e.g., < about 2.5) or high (> about 11.0) pH. After addition of an effective amount of a solubilizing agent, the pH is adjusted with a suitable acid or base to the mid pH range. The mid pH range is defined for purposes of this disclosure as a pH of from about 2.5 to 11.0, preferably from about 3.0 to about 9.0. Within this range, the instant solubilizing agents generally solubilize and/or stabilize the tellurium. Further, an excess of solubilizing agent should be maintained to keep tellurium in solution over time.

One advantage of solubilizing tellurium in the mid-pH range is to allow the use of tellurium solutions in processes or systems where low pH's and high pH's are impractical. Examples include processes which involve the deposition of tellurium onto a surface, organic synthesis and catalysis.

## Examples

The following examples further demonstrate the instant compositions and method. These examples are not meant to limit the instant invention in any way.

## Example 1

The effect of various compounds on the solubility of tellurium in water at pH 4.5 was determined by observing the presence or lack of a precipitate. An amount equal to 0.0016 moles of each compound screened was added to 100ml of deionized water. Ten milliliters of a 1,000 ppm solution of tellurium in hydrochloric acid were added to each solution to produce a solution containing approximately 100 ppm tellurium. This amount is equivalent to 7.8 X $10^{-5}$ moles of tellurium (active tellurium basis). The pH was then adjusted to 4.5 with 1.0N sodium hydroxide. The following table shows the results of this screening:

| Compounds Which Do Not Maintain Tellurium Solubility | Compounds which Maintain Tellurium Solubility |
|---|---|
| Chloroacetic Acid<br>Acetic Acid<br>Methanol<br>Iso-Butanol | Hydroxyacetic Acid<br>Tannic Acid<br>Tartaric Acid<br>Citric Acid |
| Propylene Glycol<br>Ethylene Glycol | 2,6-Pyridine-Dicarboxylic Acid |
| Dextrose<br>STMP<br>Benzoic Acid<br>Oxalic Acid<br>Succinic Acid<br>Diethylenetriaminepenta-Acetic Acid<br>EDTA<br>NTA<br>Hydrochloric Acid<br>Sulfuric Acid<br>Phosphoric Acid<br>L-(+)-Glutamic Acid<br>Ascorbic Acid<br>Methacrylic Acid<br>Lactose<br>Ammonium Purpurate Acid<br>p-Hydroxybenzoic Acid<br>Trans-Cinnamic Acid<br>Sodium Tetraphenylboron<br>Boric Acid<br>Oxamic Acid<br>Oxalacetic Acid<br>Iso-Phthalic Acid<br>Salicylic Acid | Lactic Acid<br>Glucono δ-Lactone<br>(Gluconic Acid)<br>2-Furoic Acid<br>Thiophene-2-Carboxylic<br>2,3-Pyridine -Dicarboxylic Acid<br>Phosphonoacetic Acid<br>Thiophene-2-Acetic Acid<br>Mercaptoacetic acid |

Example 2 - Citric Acid

The ratio of citric acid to tellurium required to produce substantially complete solubility in the mid pH range was determined utilizing two different methods. The first method was a visual procedure. Solutions having varying citric acid:tellurium molar ratios were prepared and the pH of each was adjusted to 4.5. Whether or not these solutions were cloudy or clear was noted as can be seen in the following table:

| Citric Acid/Te Ratio | |
|---|---|
| Approximate Molar Ratio Citric:Te | Appearance |
| 2:1 | Clear |
| 1.5:1 | Clear |
| 1.25:1 | Clear |
| 1:1 | Cloudy |

The solutions were clear until a molar ratio of approximately 1:1 was reached, which produced a cloudy solution. The values shown in the table are approximate molar ratios.

A more quantitative method was then utilized to more accurately determine the ratio which provides substantially complete solubilization. This method, which measured the UV absorbance of tellurium, indicated that there is no increase in absorbance as the tellurium concentration increases until a molar ratio of 1:1 tellurium to citric acid is reached, at which point the absorbance significantly increases. It is theorized that this increase in absorbance is due to the presence of non-chelated tellurium, as opposed to tellurium

which is complexed with citric acid when the citric acid: Te molar ratio exceeds about 1:1.

**Claims**

**1.** A composition comprising:
a) water;
b) at least about 0.00001%, by weight, based on the weight of a), of tellurium ions;
c) an effective amount for the purpose of solubilizing and/or stabilizing tellurium ions of a solubilizing agent selected from the group consisting of $\alpha$-substituted organic acids having sufficient electron density to complex with tellurium.

**2.** The composition of Claim 1, wherein said solubilizing agent is selected from the group consisting of hydroxyacetic acid, tannic acid, tartaric acid, citric acid, 2,6-pyridine dicarboxylic acid, lactic acid, glucono$\delta$-lactone (gluconic acid), 2-puroic acid, thiophene-2-carboxylic acid, 2,3-pyridine dicarboxylic acid, phosphonoacetic acid, thiophene-2-acetic acid and mercaptoacetic acid.

**3.** The method of Claim 2, wherein said solubilizing agent is selected from the group consisting of citric acid, tartaric acid and hydroxyacetic acid.

**4.** The method of Claim 3, wherein said composition has a pH between about 2.5 and 11.0.

**5.** The method of Claim 3 or Claim 4, wherein said solubilizing agent is citric acid.

**6.** A method of solubilizing tellurium into water having a pH of from about 2.5 to about 11.0 which comprises adding an effective amount of a solubilizing agent selected from the group consisting of $\alpha$-substituted organic acids having sufficient electron density to complex with tellurium to an aqueous system containing or which will contain a tellurium ion source.

**7.** The method of Claim 6 wherein said solubilizing agent is selected from the group consisting of hydroxyacetic acid, tannic acid, tartaric acid, citric acid, 2,6-pyridine dicarboxylic acid, lactic acid, glucono$\delta$-lactone (gluconic acid), 2-puroic acid, thiphene-2-carboxylic acid, 2,3-pyridine dicarboxylic acid, phosphonoacetic acid, thiophene-2-acetic acid and mercaptoacetic acid.

**8.** The method of Claim 7, wherein said solubilizing agent is selected from the group consisting of citric acid, tartaric acid and hydroxyacetic acid.

**9.** The method of Claim 7, wherein the molar ratio of said solubilizing agent to said tellurium is at least about 1:1.

**10.** The method Of Claim 9, wherein said solubilizing agent is citric acid.

European Patent Office

# EUROPEAN SEARCH REPORT

Application Number

EP 92 20 2266

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X<br>L | EP-A-0 402 084 (CALGON CORP.)<br>* Page 3, lines 34,38-50, page 4, lines 1-9,34-40,42,43; page 5, lines 3-47, examples 1-5, claims 1,4 * Document so quoted for its casting doubt on the first deposit character of US-Ser. no. 739 010 of 31-07-1991 and thus validity of the convention priority claim<br>--- | 1-10 | C 07 C 395/00<br>C 01 B 19/00 |
| X | US-A-3 475 292 (H.H. SHOUSHANIAN)<br>* Abstract; column 2, lines 1-15,53-66; column 3, lines 7-15 *<br>--- | 1-3,5-10 | |
| X | DE-A-3 522 117 (METALL- UND OBERFLÄCHENCHEMIE SPERZEL GmbH)<br>* Claims 1,2,4,5 *<br>----- | 1-8 | |

TECHNICAL FIELDS SEARCHED (Int. Cl.5)

C 23 C
C 07 C
C 01 B

The present search report has been drawn up for all claims

| Place of search | Date of completion of the search | Examiner |
|---|---|---|
| THE HAGUE | 03-09-1992 | FISCHER W.H.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)